# EUROPEAN PATENT APPLICATION

(11) **EP 2 424 217 A2**
(43) Date of publication of application: **29.02.2012**
(21) Application number: 11177134.1
(22) Date of filing: 10.08.2011
(51) Int. Cl.: H04N 1/60

(54) **Apparatus and method of controlling an image forming apparatus**

(30) Priority: 26.08.2010 JP 2010189881
(71) Applicant: Ricoh Company, Ltd., Tokyo 143-8555 (JP)
(72) Inventor: Nishida, Hirobumi, Tokyo, 143-8555 (JP)
(74) Representative: White, Duncan Rohan

(57) **Abstract**

A control device (406) for controlling image processing of an image forming apparatus (100) specifies a colour measurement area in image data, obtains a measured colour of the colour measurement area of a multi-colour toner image of the image data, obtains a reference colour of the colour measurement area of the image data, constructs an algorithm for image processing parameter correction, and determines a correction value of an image processing parameter of the image forming apparatus (100) so as to make the difference between the measured colour and the reference colour to be smaller.

## Description

The present invention generally relates to an apparatus and method of controlling image processing conditions of an image forming apparatus such as a copier, facsimile, and printer.

In image forming apparatuses that form a toner image using electrophotographic method, image density of the toner image may be easily affected as toner adhesion per unit area of the toner image changes. For example, toner adhesion tends to change after printing is consecutively performed or when environmental factors such as humidity or temperature change. In case of forming multi-colour images, when toner adhesion changes for a primary colour, colour tone of multi-colour images may be adversely affected. For example, a colour balance of L*, a* , and b* of L*a*b* colour system may vary. More specifically, colours used by colour image forming apparatuses are mainly classified into primary colours and multi-colours. The primary colours are reproduced using only one type of toner. If there are four types of toner including yellow toner, magenta toner, cyan toner, and black toner, any one of colours that can be reproduced using one type of toner is referred to as the primary colour. The multi-colours are reproduced using more than one type of toner, such as by superimposing toner of more than one primary colour. If toner adhesion of primary colour toner changes, the resultant multi-colour toner image that is generated by superimposing more than one primary colour toner would not have expected colour tone.

Japanese Patent Application Publication No. 2002-033935 and U.S. Patent Application Patent No. 7,307,752 describes a colour marking device provided with a control system for calibration of the device. The device outputs a test pattern of multi-colours with varied tones onto a test sheet, and adjusts image processing conditions based on reflectance obtained from the test pattern to control image density. More specifically, the tone reproduction curve (TRC) is corrected based on the detection results obtained through the test pattern, and the colour images are formed based on the corrected TRC. With this calibration process, quality of output images are kept relatively high even when image forming processing conditions are changed.

The above-described device has a drawback such that it prints out a test toner image in addition to a toner image that is supposed to be output according to a user instruction. This would require a user to sort the printed sheets into the sheets that are needed, and the sheets that are output for measurement purposes. Due to excessive work, it is not practical to use the above-described technique, which requires output of the test toner image.

Further, the calibration technique used by the above-described device tends to reproduce the multi-colour image with colours that are slightly different from the colours that are expected. For example, a green colour of a multi-colour image tends to be yellowish than a green colour that is expected to be produced. This shift in colour is thought to be caused by various factors such that it has been difficult to specify which factor is causing such colour shift.

In view of the above, an objective of the present invention is to provide an image forming apparatus, and an apparatus and a method of controlling image processing conditions of an image forming apparatus, each of which is capable of forming a toner image with improved colour reproducibility without requiring output of a test toner image.

In order to achieve the above-mentioned object, there is provided a control device according to claim 1.

A more complete appreciation of the disclosure and many of the attendant advantages and features thereof can be readily obtained and understood from the following detailed description with reference to the accompanying drawings, wherein:

FIG. 1 is a schematic block diagram illustrating a selected portion of an image forming apparatus according to an example embodiment of the present invention;

FIG. 2 is an enlarged view of an image forming unit of the image forming apparatus of FIG. 1;

FIG. 3 is a schematic block diagram illustrating electric connections of various units in the image forming apparatus of FIG. 1;

FIG. 4 is a schematic block diagram illustrating a main controller and its peripheral section of the image forming apparatus of FIG. 1;

FIG. 5 is a flowchart illustrating operation of printing a toner image while performing image processing control to improve colour reproducibility, performed by the main controller of FIG. 4, according to an example embodiment of the present invention;

FIG. 6 is an illustration of example image data supplied to the image forming apparatus of FIG. 1;

FIG. 7 is an illustration of a colour measurement area applicable to colour measurement detected in the example image data of FIG. 6;

FIG. 8 is a graph illustrating tone reproduction curves at different times, which are processed by the main controller of FIG. 4; and

FIGS. 9A to 9G are a list of equations illustrating calculation performed by the main controller of FIG. 4, according to an example embodiment of the present invention.

The accompanying drawings are intended to depict example embodiments of the present invention and should not be interpreted to limit the scope thereof. The accompanying drawings are not to be considered as drawn to scale unless explicitly noted.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner.

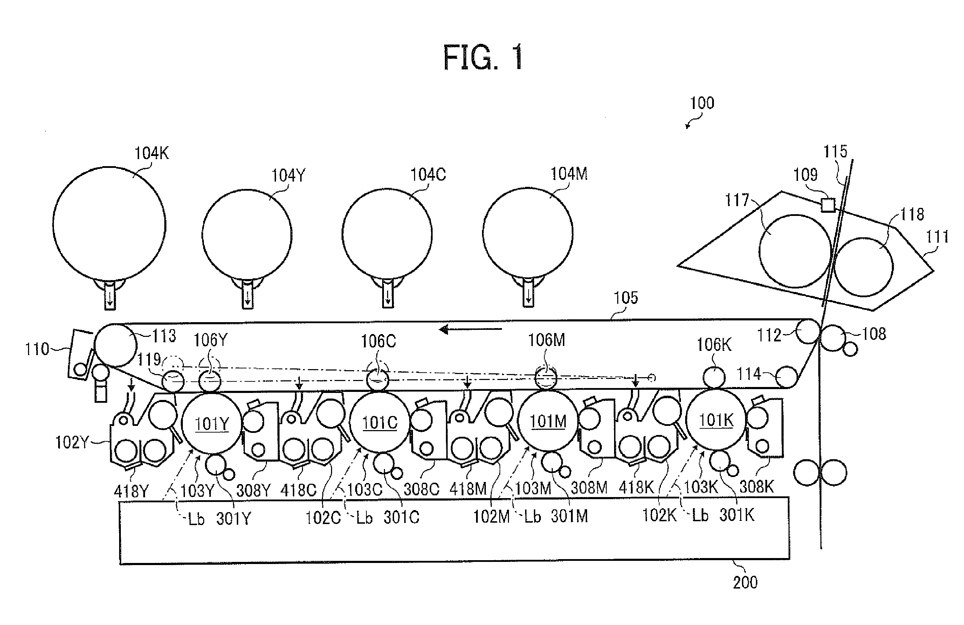

Referring now to FIG. 1, a structure of an image forming apparatus 100 is explained according to an example embodiment of the present invention. In this example, the image forming apparatus 100 is implemented by a colour production printer with high-volume and high-speed printing capability. For example, the image forming apparatus 100, which may be referred to as the printer 100, is capable of continuously printing out tens of millions of invoices or receipts in about one week. For example, the printer 100 operates for several tens of hours to continuously output several hundreds of printed documents per one minute.

FIG. 1 illustrates a structure of a selected portion of the printer 100, which includes a process engine section that performs image formation using electrophotographic method. The operation of image formation includes, for example, exposing, charging, developing, transferring and fixing. The printer 100 further includes a sheet tray for storing therein a stack of recording sheets, a sheet feeding device that transfers a recording sheet 115 from the sheet tray to the process engine section shown in FIG. 1, a manual feed tray for allowing a user to manually feed the recording sheet 115 toward the process engine section, and a discharge tray from which the recording sheet 115 having the printed image thereon is discharged.

Referring to FIG. 1, the process engine section of the printer 100 includes four image forming units 103Y, 103C, 103M, and 103K, four toner bottles 104K, 104Y, 104C, and 104M, an intermediate transfer belt 105, four support rollers 112, 113, 114, and 119, primary transfer rollers 106Y, 106C, 106M, and 106K, and an image writing unit 200.

The intermediate transfer belt 105, which is an endless belt, is stretched over the support rollers 112, 113, 114, and 119, and is rotated in the counterclockwise direction as the support roller 112 functioning as a drive roller is rotated. The support rollers 113, 114, and 119 rotate together with rotation of the support roller 112.

The image forming units 103Y, 103C, 103M, and 103K are disposed below the intermediate transfer belt 105. The image forming units 103Y, 103C, 103M, and 103K are substantially similar in function and structure except for the colour of toner being used. In this example, Y, C, M, and K respectively correspond to yellow, cyan, magenta, and black. The image forming unit 103Y, 103C, 103M, and 103K respectively include a photoconductor 101Y, 101C, 101M, and 101K, a developer 102Y, 102C, 102M, and 102K, and a charger 301Y, 301C, 301M, and 301K. For the descriptive purposes, the image forming units 103Y, 103C, 103M, and 103K are collectively referred to as the image forming unit 103.

The primary transfer rollers 106Y, 106C, 106M, and 106K are disposed within a loop formed by the intermediate transfer belt 105 at the positions that face the photoconductors 101Y, 101C, 101M, and 101K, respectively. The primary transfer rollers 106Y, 106C, 106M, and 106K press the belt 105 against the photoconductors 101Y, 101C, 101M, and 101K to form primary transfer nips at the positions where the photoconductors 101Y, 101C, 101M, and 101K and the belt 105 are made in contact.

The toner bottles 104Y, 104C, 104M, and 104K are disposed above the intermediate transfer belt 105. The toner bottles 104Y, 104C, 104M, and 104K each contains therein toner to be supplied to the developers 102Y, 102C, 102M, and 102K.

The charger of the image forming unit 103 uniformly charges the surface of the photoconductor 101 with a polarity that is the same with the charging polarity of toner. In FIG. 1, the charger is implemented as a charging brush roller. When charging bias is applied to the charging brush roller, the charging brush roller is made in close contact with the surface of the photoconductor 101 to charge the surface of the photoconductor 101. Alternatively, the charger may be implemented as any desired charger such as a scorotron charger.

The image writing unit 200 is disposed below the image forming units 103Y, 103C, 103M, and 103K. The image writing unit 200 mainly includes a light source such as a semiconductor laser, and a lens mechanism such as a polygon mirror. The image writing unit 200 drives the semiconductor laser according to image data that is received from the external computer to irradiate light beams Lb of respective colours of Y, M, C, and K. With the polygon mirror, the light beams Lb are scanned in the main scanning direction onto the surfaces of the photoconductors 101Y, 101C, 101M, and 101K, respectively. In this manner, the latent images of Y, C, M, and K colours are respectively formed on the surfaces of the photoconductors 101Y, 101C, 101M, and 101K. In alternative to the semiconductor laser, any desired light source may be used such as a light emitting diode (LED).

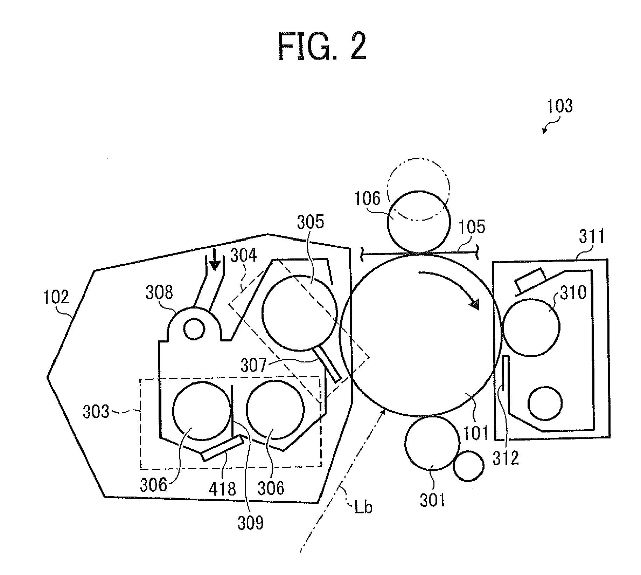

Referring now to FIG. 2, a structure of the image forming unit 103 is explained according to an example embodiment of the present invention.

The image forming unit 103 includes the charger 301, the developer 102, and a cleaner 311, in the circumferential direction of the photoconductor 101. As described above referring to FIG. 1, the primary transfer roller 106 is disposed at the position that faces the photoconductor 101 via the belt 105. In alternative to the primary transfer roller 106, any device functioning as a primary transfer unit may be used such as a conductive blush-type transfer unit or non-contact type corona charger.

In this example, the charger 301 is implemented as a charging roller of contact-type. The charger 301 uniformly charges the surface of the photoconductor 101 by applying voltage to the photoconductor 101 while being in contact with the surface of the photoconductor 101. In alternative to the contact-type charging roller, the charger 301 may be implemented as a non-contact type charger such as scorotron charger.

The developer 102 contains therein a developing agent having magnetic carrier and nonmagnetic carrier. Alternatively, a single component developing agent may be used. The developer 102 includes a developer case 308, which includes a developing sleeve 305 and two screws 306. The developer case 308 of the developer 102 is mainly classified into an agitator section 303 and a developer section 304. The agitator section 303 agitates the two-component developing agent ("developing agent") and transfers the agitated developing agent to the developing sleeve 305 that functions as a developer carrier.

The agitator section 303 includes the two screws 306 that are arranged in parallel with each other. Between these two screws 306, a separation plate 309 is provided to allow the ends of the screws 306 to be in connection with each other. The developer case 308 further includes a toner density sensor 418 that detects toner density of the developing agent within the developer 102. The developer section 304 transfers the toner that is separated from the developing agent as it is adhered to the developing sleeve 305 to the photoconductor 101.

The developing sleeve 305 is disposed at the position that faces the photoconductor 101 via an opening of the developer case 308. The developing sleeve 305 contains therein a magnet. Further, a doctor blade 307 is provided such that the tip of the doctor blade 307 is made in contact with the developing sleeve 305. In this example, the doctor blade 307 is disposed at the position such that a distance between the doctor blade 307 and the developing sleeve 305 when the doctor blade 307 is made in close contact is about 0.9 mm. In the developer 102, the two screws 306 agitate, circulate, and transfer the developing agent to the developing sleeve 305. The developing agent supplied to the developing sleeve 305 is collected and kept by the magnet. The developing agent collected by the developing sleeve 305 is transferred with rotation of the developing sleeve 305. As the developing agent passes through the doctor blade 307, the doctor blade 307 regulates an amount of the developing agent to be a desired amount. The developing agent that is removed by the doctor blade 307 from the developing sleeve 305 is transferred back to the agitator section 303.

The developing agent is transferred to a developing section where the developing sleeve 305 is made in contact with the photoconductor 101. At the developing section, the developing agent stands up due to the magnet to form a magnet brush. With a developing bias being applied to the developing sleeve 305, a developing electric field is formed to cause the toner in the developing agent to be transferred from the developing sleeve 305 to a latent image portion of the photoconductor 101. As the toner in the developing agent is transferred to the latent image portion of the photoconductor surface, the latent image is developed into a toner image. As the developing agent is transferred from the developing area to a section that is not much affected by the magnet, the developing agent is separated from the developing sleeve 305 and transferred to the agitator section 303. When the toner density sensor 418 detects that the toner density within the agitator section 303 is lowered, the toner is supplied to the agitator section 303.

The cleaner 311 is disposed at the position such that the tip of a cleaning blade 312 is pressed against the surface of the photoconductor 101. The cleaning blade 312 may be made of polyurethane rubber. In this example, to improve the cleaning capability, the cleaner 311 further includes a conductive fur brush 310 that is made in contact with the photoconductor 101. The fur brush 310 is applied with a bias from an electric field roller, such as a metal roller. The electric field roller is pressed with the tip of scraper. The toner removed from the surface of the photoconductor 101 by the cleaning blade 312 and the fur brush 310 is collected in the cleaner 311, and further transferred to a used toner collection unit.

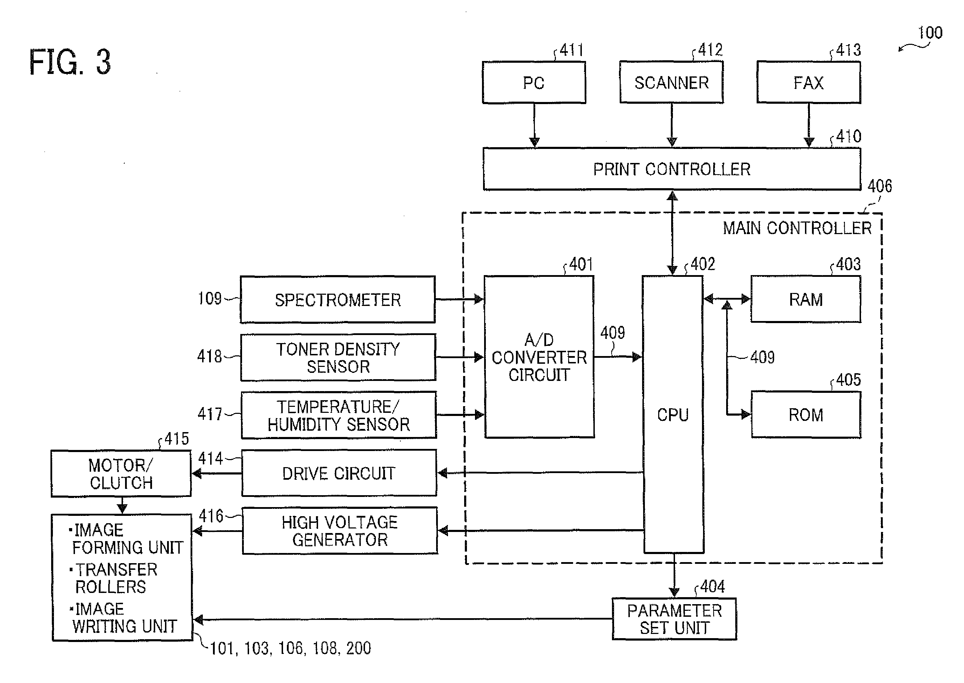

In the image forming unit 103, the surface of the photoconductor 101 that is rotated is uniformly charged by the charger 301. The image writing unit 200 forms a latent image on the surface of the photoconductor 101 by scanning the light beam Lb according to image data received from a print controller 410 (FIG. 3). The developer 102 develops the latent image into toner image such that toner images of Y, M, C, and K are respectively formed. At the primary transfer nip, the toner image is transferred from the surface of the photoconductor 101 to a surface of the intermediate transfer belt 105. The residual toner that resides on the surface of the photoconductor 101 after image transfer is removed by the cleaner 311.

In the above-described manner, the image forming units 103Y, 103C, 103M, and 103K form toner images of Y, C, M, and K onto the surfaces of the photoconductors 101Y, 101C, 101M, and 101K. At the primary transfer nips of Y, C, M, and K, the toner images of Y, C, M, and K are transferred onto the surface of the intermediate transfer belt 105 so as to be superimposed one above the other. In this manner, a colour-composite image is formed on the surface of the intermediate transfer belt 105.

Referring back to FIG. 1, the printer 100 further includes a secondary transfer roller 108, which is provided in the outside of the loop formed by the intermediate transfer belt 105. The transfer roller 108 is made in contact with the support roller 112 via the intermediate transfer belt 105 to form a secondary transfer nip. The secondary transfer roller 108 is applied with a secondary transfer bias having a polarity that is opposite of the toner charging polarity. The printer 100 further includes a registration roller below the secondary transfer nip, which transfers the recording sheet 115 toward the secondary transfer nip in synchronization with formation of the colour-composite image on the intermediate transfer belt 105. As the recording sheet 115 enters the secondary transfer nip, the colour-composite image formed on the intermediate transfer belt 105 is transferred from the intermediate transfer belt 105 onto the recording sheet due to the secondary transfer bias and the nip pressure. In this manner, the recording sheet 115 is printed with a full-colour toner image. In this example, the secondary transfer roller 108 may be replaced with a scorotron charger.

The printer 100 further includes a fixing unit 111 that is provided above the secondary transfer roller 108. The fixing unit 111 fixes the full-colour toner image formed on the recording sheet 115 to the recording sheet 115. The fixing unit 111 includes a heating roller 117 and a pressure roller 118, which are made in pressure contact with each other. The fixing unit 111 further includes a spectrometer 109, which detects the colour of the full-colour toner image formed on the recording sheet 115. For example, the spectrometer 109 is described in U.S. Patent Application Publication No. 2005/0240366, published on October 27, 2005, the entire contents of which is hereby incorporated by reference.

Further, as illustrated in FIG. 1, the printer 100 includes a belt cleaning unit 110 in the outside of the loop formed by the intermediate transfer belt 105. The belt cleaning unit 110 is made in contact with the support roller 113 via the intermediate transfer belt 105 to remove the toner from the intermediate transfer belt 105 after the colour-composite image is transferred.

FIG. 3 is illustrates the electric connections of various parts in the printer 100. The printer 100 includes a main controller 406 that functions as a controller to control entire operation of the printer 100. More specifically, the main controller 406 controls operation of each part in the printer 100 to form an image using electrophotographic method.

The main controller 406 includes a central processing unit (CPU) 402, a read only memory (ROM) 405, and a random access memory (RAM) 403, which are connected through a bus line 409. The CPU 402 controls entire operation of the printer 100 including calculation of various process or control parameters to be used for image processing and formation. The ROM 405 stores therein various data such as a computer program to control image processing operation and image forming operation. The RAM 403 functions as a work area of the CPU 402 to store various data. The main controller 406 further includes an analog digital (A/D) converter circuit 401, which is connected to the CPU 402 through the bus line 409. For example, the A/D converter circuit 401 converts analog data received from the spectrometer 109, the toner density sensor 418, or a temperature humidity sensor 417, to digital data.

The main controller 406 is connected to a print controller 410, which processes image data and converts the processed image data to exposure data. For example, the print controller 410 receives the image data from a personal computer (PC) 411, a scanner 412, or a facsimile (FAX) 413. The print controller 410, which is provided with an image processing section, converts the received image data to processed image data for output. The main controller 406 is further connected to a drive circuit 414 that drives a motor/clutch 415, and a high voltage generator 416 that generates voltage needed for an image forming section such as the image forming unit 103, the primary transfer roller 106, the image writing unit 200, and the secondary transfer roller 108.

The main controller 406 is further connected to a parameter set unit 404. The parameter set unit 404 sets various parameters such as the laser intensity of the image writing unit 200, the charge apply voltage of the charger 301, and the developing bias of the developer 102, based on calculation performed by the CPU 402. For example, the CPU 402 calculates a parameter value of the image forming section based on measurement data received from the spectrometer 109 to keep an image density at a desired level.

In printing operation, it is assumed that the printer 100 receives print data including image data to be printed, from the PC 411. The print data is generated by a printer driver installed onto the printer 100. When the print controller 410 receives the print data including the image data from the PC 411, the print controller 410 converts the image data to exposure data, and outputs an instruction for printing to the main controller 406. The main controller 406, which receives the instruction for printing, causes the CPU 402 to operate according to a computer program stored in the ROM 405 to perform image forming using the electrophotographic method. More specifically, the CPU 402 of the main controller 406 drives the motor/clutch 415 through the drive circuit 414, to drive the support roller 112 to cause the intermediate transfer belt 105 to rotate. At the same time, the CPU 402 of the main controller 406 drives the image forming section, which includes the image forming unit 103, the primary transfer roller 106, the image writing unit 200, and the secondary transfer roller 108, through the drive circuit 414, the high voltage generator 416, and the parameter set unit 404.

The main controller 406 drives the motor/clutch 415 through the drive circuit 414 in synchronization with the timing at which the colour-composite image formed on the intermediate transfer belt 105 enters the secondary transfer nip to cause the sheet feeing device to feed the recording sheet 115.

The recording sheet 115 fed by the sheet feeding device is transferred to a nip formed between the intermediate transfer belt 105 and the secondary transfer roller 108 to cause the colour-composite image to be transferred from the intermediate transfer belt 105 to the recording sheet 115. The recording sheet 115 is transferred to the fixing unit 111 with rotation of the secondary transfer roller 108. The fixing unit 111 fixes the toner image onto the recording sheet 115 by heat and pressure. The recording sheet 115, which passes the fixing unit 111, is discharged onto the discharge tray. The residual toner that resides the surface of the intermediate transfer belt 105 after image transfer is removed by the belt cleaner 110.

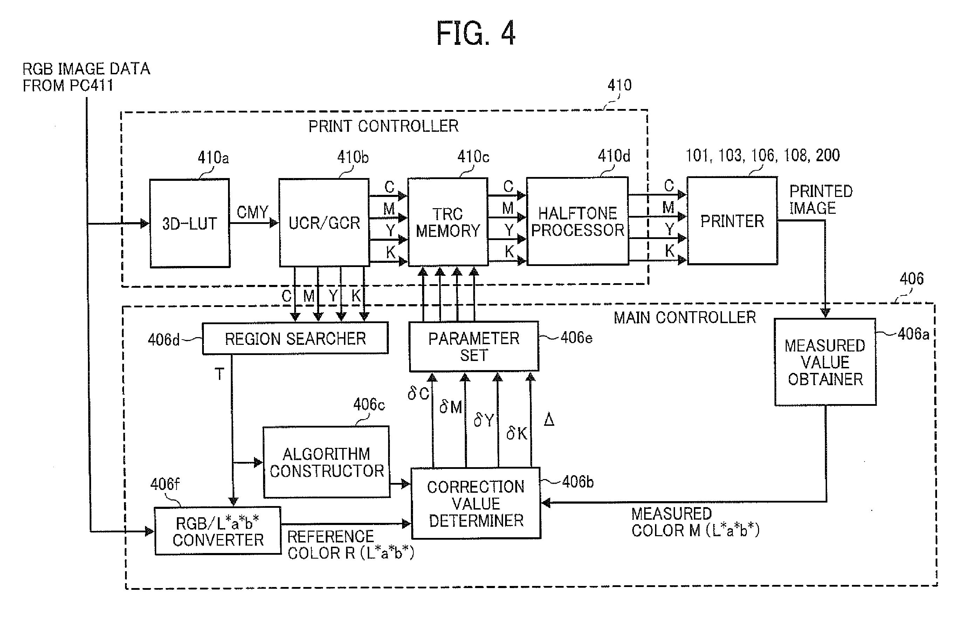

FIG. 4 illustrates the main controller 406 and its peripheral structure. The main controller 406 includes a measured value obtainer 406a, a correction value determiner 406b, an algorithm constructor 406c, a region searcher 406d, a parameter set 406e, and a RGB/L*a*b converter 406f. These modules or units are each implemented by the program stored in a data storage of the main controller 406, such as in the RAM 403 or the ROM 405. The print controller 410 includes an image processing section that processes image data for output. For example, the image processing section includes a three-dimensional look up table ("3D-LUT") 410a, an under-colour removal/gray component replacement (UCR/GCR) 410b, a tone reproduction curve (TRC) 410c, and a halftone processor 410d.

The 3D-LUT 410a stores a colour profile table of the printer 100, which is used to convert the image data from device-independent colour space to device-dependent colour space. For example, the 3D-LUT 410a converts the image data from RGB to CMY, using the colour profile table. The UCR/GCR 410b converts the image data from CMY to CMYK. The TRC 410c stores a toner reproduction curve, which indicates the relationship between input values and output values for a particular colour. In this example, the tone reproduction curve is previously stored for each of the primary colours of C, M, Y, and K. The halftone processor 410d applies halftone processing to the image data processed by the TRC 410c.

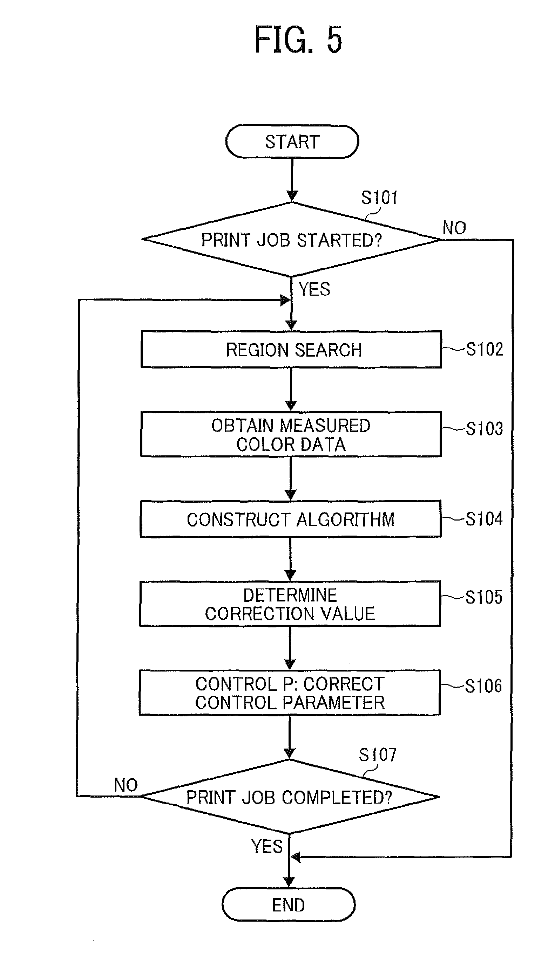

Referring now to FIG. 5, operation of printing an image while performing image processing control to improve colour reproducibility, performed by the main controller 406 of FIG. 4, is explained according to an example embodiment of the present invention.

At S101, the main controller 406 determines whether a print job is started. When it is determined that the print job is started ("YES" at S1), the operation proceeds to S2. When it is determined that the print job is not started ("NO" at S1) the operation ends.

At S102, the main controller 406 causes the region searcher 406d (FIG. 4) to perform region searching. The region searcher 406d searches an area that is most suitable for multi-colour measurement, based on image data of the image to be output, as a colour measurement area. In prior to region searching, the print controller 410 (FIG. 4) obtains the image data of the image to be output, from the external device such as the PC 411, scanner 312, or fax 413 (FIG. 3). More specifically, the image data can be expressed as pixel values of pixels that are arranged in matrix structure, each of which represents the luminance value of colour components of red (R), green (G), and blue (B) of the image data. The print controller 410 converts the image data, which is expressed as pixel values of the pixels each representing the luminance value of R, G, and B colour components, to the pixel values of the pixels each representing the luminance value of colour components of cyan (C), magenta (M), yellow (Y), and black (K). The print controller 410 sends the converted image data to the region searcher 406d of the main controller 406.

The region searcher 406d searches through all regions of the image data specified by the pixel values to determine a region, or an area, that is subjected for colour measurement. For example, the region searcher 406d detects one or more areas of the image data with low variance in colour tone as such area is more suitable for colour measurement.

In this example, the area subjected for colour measurement, which may be referred to as the colour measurement area, is searched as follows. The region searcher 406d selects a pixel located at a predetermined location in the image pixel matrix as a target pixel. The region searcher 406d further extracts an area having a predetermined size and including the target pixel as well as its surrounding pixels, as an area to be processed. For example, assuming that the region searcher 406d obtains the image pixel matrix of 200 dpi resolution, the region searcher 406d selects a pixel located at 21st in row and 21st in column from the image pixel matrix as a target pixel, and extracts a 5 mm rectangular area of 41 pixels by 41 pixels having the target pixel at its center as an area to be processed. The area of 41 pixels by 41 pixels is equivalent to an area of 61 pixels by 61 pixels in case the image pixel matrix is 300 dpi.

By referring to the pixel value C, M, Y, and K of each pixel in the extracted area, the region searcher 406d calculates the flatness indicating the degree of flatness in tone, or the degree of flatness in lightness or brightness, of colour through the entire section of the extracted area.

The flatness may be calculated in various ways. In one example, for each colour components of C, M, Y, and K, variance of pixel values is obtained. The flatness in the extracted area is obtained as a negative value of the sum of variance of pixel values obtained for C, M, Y, and K colour components.

In another example, the flatness in the extracted area is obtained using variance-covariance matrix. More specifically, for each colour components of C, M, Y, and K, variance and covariance of each pixel in the extracted area are obtained. The variance and the covariance are respectively positioned as diagonal elements and non-diagonal elements to construct the 4X4 variance-covariance matrix. The flatness in the extracted area is obtained as a negative value of a solution to this variance-covariance matrix. When compared with the above-described example of obtaining the flatness based on variance of pixel values, the variance-covariance matrix is able to evaluate distribution of colours in the CMYK colour space even among different colour components.

In another example, the flatness in the extracted area is obtained using frequency characteristics of colours. More specifically, the pixel value of each pixel in the extracted area is applied with Fourier transformation to obtain the squared sum of the absolute value of Fourier coefficients of a specific frequency. The flatness is obtained as a negative value of this squared sum. In this example, for the specific frequency, more than one frequency may be used. In the above-described example of obtaining the sum of variance of pixel values, for images with halftone processing, the flat area may not be accurately detected due to halftone patterns in the image. In contrary, in the example of obtaining the flatness using the frequency characteristics, the use of squared sum of absolute values of Fourier coefficients is not affected by halftone patterns in the image.

When the flatness in the extracted area is obtained, the print controller 410 determines whether all areas to be extracted have been extracted, or area extraction is completed for the entire image. When it is determined that there is an area to be extracted, the region searcher 406d shifts the position of a target pixel by one pixel, and extracts a 5 mm rectangular area of 41 pixels by 41 pixels having the target pixel as its center as an area to be processed. Once the area to be processed is extracted, the region searcher 406d calculates the flatness in tone through the entire section of the extracted area.

For example, the region searcher 406d shifts the position of a target pixel by one pixel toward left with respect to the right end of the matrix to extract an area to be processed next. This process is repeated until the position of a target pixel is shifted to the end of column of the matrix. The region searcher 406d then shifts the position of a target pixel toward right with respect to the left end of the matrix such that the position of the target pixel is located at 21st in column, and further shifts the position of the target pixel by one pixel downward such that the position of the target pixel is located at 22nd in row. For this row, the region searcher 406d repeats the above-described process of shifting the position of a target pixel by one pixel to process the entire section of the image.

In alternative to shifting the target pixel by one pixel, the region searcher 406d may extract an area to be processed such that the area to be extracted does not overlap with the adjacent area that has been previously extracted. For example, after the rectangular area of 41 pixels by 41 pixels having the 21st target pixel as its center is extracted, the region searcher 406d may extract a rectangular area of 41 pixels by 41 pixels having the 62nd row, 62nd column target pixel as its center.

When the region searcher 406d completes calculation of flatness for all extracted areas of the image data, the region searcher 406d selects one of the extracted areas having the flatness that is most desirable, and determines whether the flatness of the selected extracted area is more desirable than a reference flatness value that is previously determined. When it is determined that the flatness of the selected extracted area is more desirable than the reference flatness value, the region searcher 406d determines that the extracted area having the flatness that is more desirable is applicable to colour measurement.

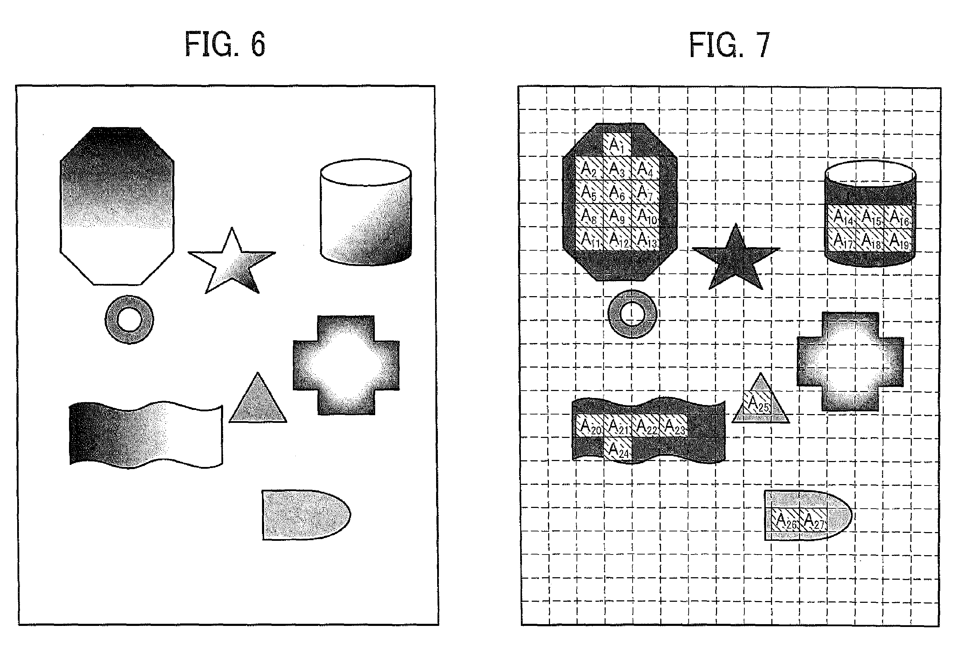

Assuming that example image data of FIG. 6 is processed by the region searcher 406d, the region searcher 406d calculates flatness in colour tone for each one of a plurality of areas as illustrated in FIG. 7, and further extracts 27 areas A1 to A27 for colour measurement as the area applicable to colour measurement.

After completion of operation performed by the region searcher 406d, at S103, the main controller 406 causes the print engine such as the image forming unit 103 ("PRINTER" in FIG. 4) to form a full-colour image on the recording sheet 115 based on the image data, and sends the recording sheet 115 having the full-colour image thereon to the fixing unit 111. At the fixing unit 111, the spectrometer 109 measures the colour of the colour measurement area on the recording sheet 115, which is selected by the region searcher 406d for colour measurement, to generate a measurement result. The measured value obtainer 406a of the main controller 406 obtains the measurement result from the spectrometer 109.

Referring back to FIG. 5, at S104, the algorithm constructor 406c (FIG. 4) constructs an algorithm to be used for calculation of correction values of image processing parameters used for the image processing section of the print controller 410. In this example, the correction values are obtained for TRC used for adjusting the density of each of Y, M, C, and K colours. The algorithm constructor 406c previously stores, in the ROM 405, an output colour model indicating the output values of mixed colours of Y, M, C, and K having various area coverage ratios. The algorithm constructor 406c constructs an algorithm used for obtaining correction values of image processing parameters, using the output colour model stored in the ROM 405, the area coverage ratios of Y, M, and C toner images obtained from the colour measurement area selected by the region searcher 406d, and the difference between the colour measurement result obtained by the measured value obtainer 406a and the reference colour that is expected to be obtained from the colour measurement area selected by the region searcher 406d.

At S105, the correction value determiner 406b (FIG. 4) determines correction values of image processing parameters for each of Y, M, C, and K colours based on the algorithm constructed by the algorithm constructor 406c. In this example, the correction values to correct the TRCs for the primary colours are respectively obtained.

At S106, the parameter set 406e (FIG. 4) corrects image processing parameters of the print controller 410 based on the correction values determined at S105.

At S107, the main controller 406 determines whether the print job is completed. When it is determined that the print job is completed ("YES" at S107), the operation ends. When it is determined that the print job is not completed ("NO" at S107), the operation returns to S 102 to repeat the above-described steps.

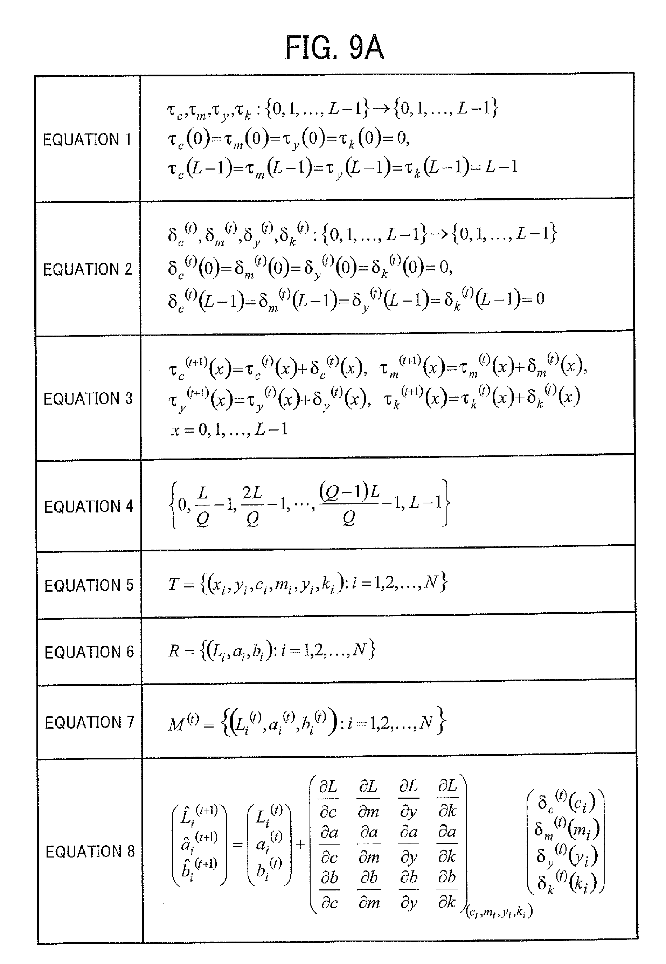

Referring now to FIGS. 9A to 9G, S104 of constructing an algorithm is explained in more detail.

In the following examples, it is assumed that the density of each of C, M, Y, and K colours, which is expressed in terms of area coverage ratio of the toner image in the measurement area, is quantized into the L levels that range between 0 and (L-1). The density at the level 0 and the density at the level (L-1) indicate the density when the toner image is blank and the density when the toner image is solid, respectively. The TRC can be expressed as the functions τ_{c}, τₘ, τ_{y}, and τₖ, each of which is obtained independently for the colours C, M, Y, and K, as shown by the equation 1 of FIG. 9A. As indicated by the equation 1 of FIG. 9A, the TRC outputs for the blank level of 0 and the solid level of (L-1) are fixed to 0 and (L-1), respectively. The TRC for the colours C, M, Y, and K respectively obtained at time t are defined as τ_{c}^{(t)}, τₘ^{(t)}, τ_{y}^{(t)}, and τₖ^{(t)}. The differences in TRC between the time t and the time (t+1) for the colours C, M, Y, and K, which are respectively expressed as δ_{c}^{(t)}, δₘ^{(t)}, δ_{y}^{(t)}, and δₖ^{(t)}, are set to 0 under control of TRC, as indicated by the equation 2 of FIG. 9A. The relationship between TRC at the time t and TRC at the time (t+1) for each colour is defined to be the equation 3 of FIG. 9A. In this example, it is assumed that the time t is counted from the time when the printing job is started at S 101 of FIG. 5 based on the number of printing operation performed by the printer 100.

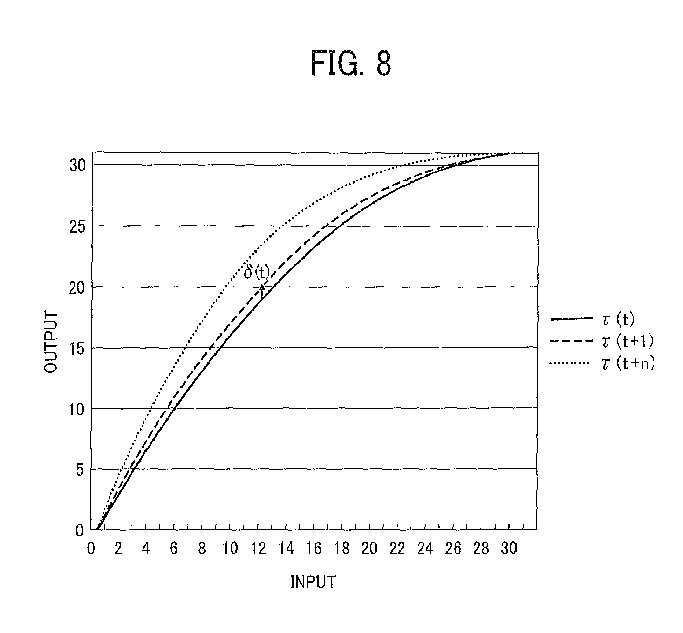

FIG. 8 illustrates the TRC outputs τ(t), τ(t+1), and τ(t+n), which are respectively obtained for the time t, (t+1), and (t+n), when the level L is 32. The difference δ(t) of FIG. 8 indicates the difference in TRC outputs between the time t and the time (t+1).

The algorithm constructor 406c previously stores, in the ROM 405 (FIG. 3), an output colour model, which represents the output values of mix colours of Y, M, C, and K having various different densities (area coverage ratios). For example, the output colour model is obtained as follows. For each of C, M, Y, and K colours, the density levels that range between the level 0 and the level (L-1) are quantized, equally by Q, to obtain the samples of (Q+1) levels as indicated by the equation 4 of FIG. 19. In the equation 4, Q is a divisor of L. For the (Q+1)⁴ combinations of combined colours, the XYZ tristimulus values are measured and stored. For example, assuming that L is 16 and Q is 4, each of the primary colours is quantized into 5 levels of {0, 3, 7, 11, 15}. For the mixed colours of 5⁴, that is, 625 mixed colours, the XYZ tristimulus values are measured and stored in the ROM 405 in the form of database.

As described above referring to S102 of FIG. 5, the region searcher 406d extracts the colour measurement area from the image data, while taking account the characteristics in colour flucuations such as flatness in tone. The region searching is performed with respect to the digital data, which is CMYK data processed by the UCR/GCR 410b (FIG. 4). The colour measurement area is expressed as the equation 5 of FIG. 9A, with i being used for identifying a specific sample of the total of N samples that are obtained as the colour measurement area. In the equation 5, the value (xᵢ, yᵢ) indicates the location of the ith sample in the image data, and (ci, mi, yi, ki) indicates the density of toner image for each colour of C, M, Y, and K. The function T, which is information regarding the colour measurement area, is sent to the RGB/L*a*b* converter 406f and the algorithm constructor 406c.

The RGB/L*a*b* converter 406f, which obtains information regarding the position (xᵢ, yᵢ) of the ith sample from the function T, refers to the position (xᵢ, yᵢ) in the original RGB image data to calculate a reference colour R = {(Lᵢ, aᵢ, bᵢ): i=1, 2, ..., N} of the ith sample, as shown by the equation 6 of FIG. 9A. The reference colour R, which is expressed as (Lᵢ, aᵢ, bᵢ), is the L*a*b* reference colour that is obtained by converting the RGB value of the ith sample that is located at the position (xᵢ, yᵢ) of the RGB image data. The reference colour R is sent to the correction value determiner 406b.

Further, as described above, at S103, the main controller 406 causes the image forming unit 103 to form the full-colour image on the recording sheet 115 based on the image data processed by the print controller 410, and further causes the spectrometer 109 to measure the colour of the colour measurement area on the recording sheet 115 to generate the measurement result. The measured value obtainer 406a obtains the measurement result M(t) of the colour measurement area, by referring to the position of each sample that is indicated by the function T, as shown by the equation 7 of FIG. 9A: M(t) = {(Lᵢ^{(t)}, aᵢ^{(t)}, bᵢ ^{(t)}): i = 1, 2, ..., N}.

The measurement result M(t), which is expressed as (Lᵢ^{(t)}, aᵢ^{(t)}, bᵢ ^{(t)}), is the measured L*a*b* colour values of the ith sample that is located at the position (xi, yi) of the image data at the time t.

The algorithm constructor 406c (FIG. 4) constructs an algorithm used for estimating correction values, using the output colour model of mixed colours of Y, M, C, and K having varied area coverage ratios stored in the ROM 405, the function T that represents the area coverage ratio of the colour measurement area for Y, M, and C toner images, the difference between the measurement result M(t) and the reference colour R.

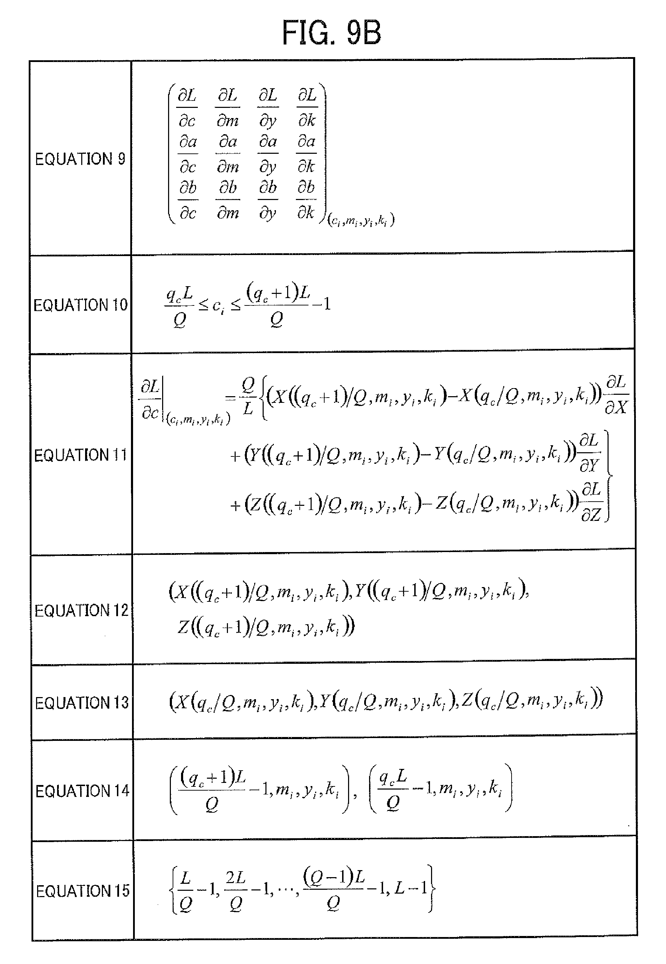

The estimated value of the measured L*a*b* colour of the ith sample positioned at (xᵢ, yᵢ) of the image data at the time (t+1) is defined as { Lᵢ^{(t+1)}, aᵢ^{(t+1)}, bᵢ ^{(t+1)}}. As shown by the equation 8 of FIG. 9A, the estimated value of the measured L*a*b* colour can be calculated using the measured L*a*b* colour (Lᵢ^{(t)}, aᵢ^{(t)}, bᵢ^{(t)}) of the ith sample positioned at (xᵢ, yᵢ) at time t, Jacobian matrix that is a collection of partial derivatives of C, M, Y, and K densities (ci, mi, yi, ki) of the L*a*b* components, and the differences in TRC between the time t and the time (t+1) that are respectively defined as δ_{c}^{(t)}, δₘ^{(t)}, δ_{y}^{(t)}, and δₖ^{(t)}. Jacobian matrix of the ith sample, shown by the equation 9 of FIG. 9B, is calculated as follows.

The value q_{c} is defined to be an integer that satisfies the equation 10 of FIG. 9B. The value (∂L/∂c) can be calculated using the output colour model of the YMCK mixed colours having varied densities, which is previously stored in the ROM 405, as shown by the equation 11 of FIG. 9B.

The equation 12 of FIG. 9B and the equation 13 of FIG. 9B, which are a part of the equation 11 of FIG. 9B, are each defined to be the XYZ tristimulus value when the CMYK densities are respectively expressed by the equation 14 of FIG. 9B. The equation 12 and the equation 13 can be calculated using interpolation based on the XYZ tristimulus database that is previously stored as the output colour model. The other 11 elements of Jacobian matrix can be obtained in a substantially similar manner.

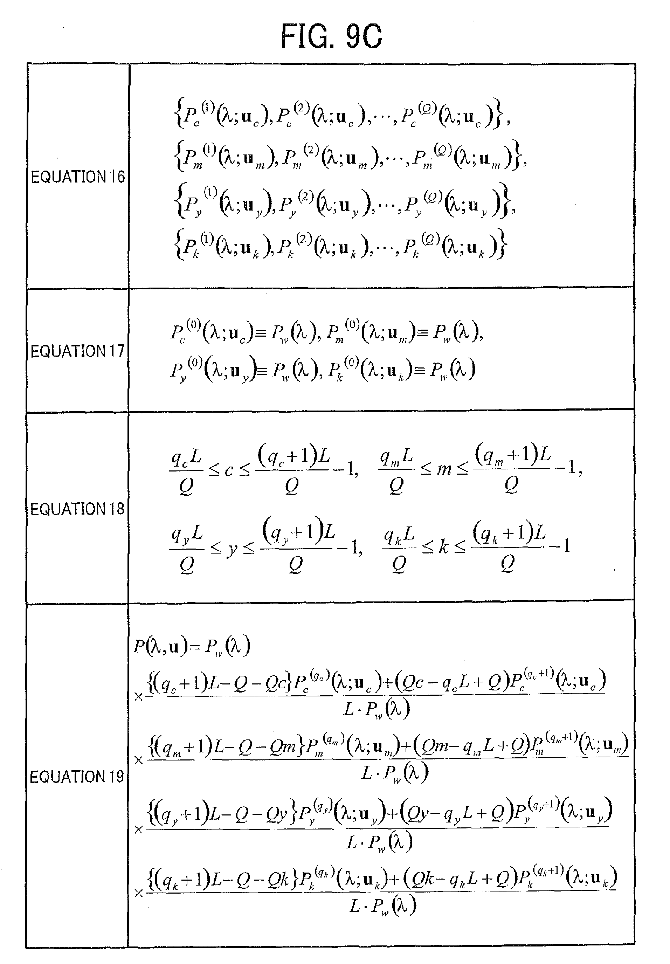

More specifically, assuming that the CMYK densities at Q level are expressed by the equation 15 of FIG. 9B, the model functions of spectral reflectance for the CMYK densities are defined to be the equation 16 of FIG. 9C.

In the equation 16, c, m, y, and k respectively correspond to cyan, magenta, yellow, and black. The model function Pₓ ^{(q)}(λ; uₓ) represents the standardized value of spectral reflectance of the wavelength λ at the density (qL)/Q-1, under the process conditions uₓ, for a specific primary colour x. The process conditions Uₓ may be set by defining the charged DC bias potential, the exposure laser power, and the developing bias potential. Further, Pₓ⁽⁰⁾(λ;uₓ), which is shown by the equation 17 of FIG. 9C, is defined to be spectral reflectance obtained for white paper.

For the mixed CMYK colours (c, m, y, k), the integers q_{c}, qₘ, q_{y}, and qₖ are each defined to satisfy the conditions indicated by the equation 18 of FIG. 9C.

The spectral reflectance P, under the process conditions u=(u_{c}, uₘ, u_{y}, uₖ), can be defined as the equation 19 of FIG. 9C, based on Cellular Spectral Neugebauer model P_{w} and the multiplied value of CMYK primary colours and spectral reflectance of paper.

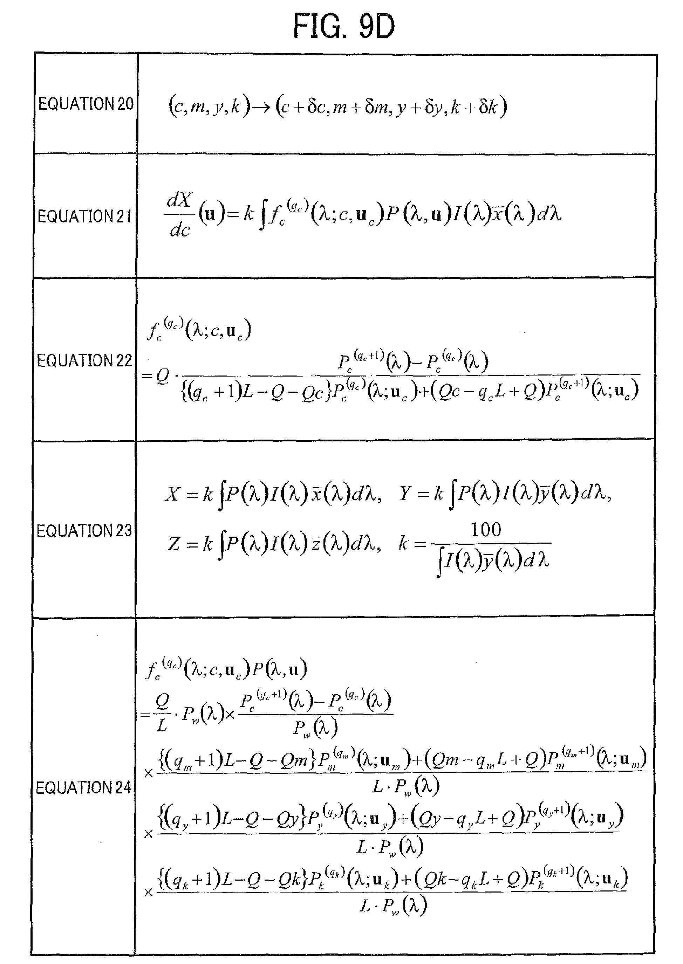

Assuming that TRC outputs change as indicated by equation 20 of FIG. 9D, the partial derivative of XYZ values with respect to cyan can be defined to be the equation 21 of FIG. 9D.

The function f_{c}^{(qc)} in the equation 21 is defined to be the equation 22 of FIG. 9D. As shown by the equation 23 of FIG. 9D, the values x(λ), y(λ), and z(λ) are colour matching functions for X, Y, and Z, I(λ) indicates spectral reflectance of wavelength λ at the standard light source, and k is a normalization constant. Accordingly, the equation 21 of FIG. 9D is defined to be the equation 24 of FIG. 9D.

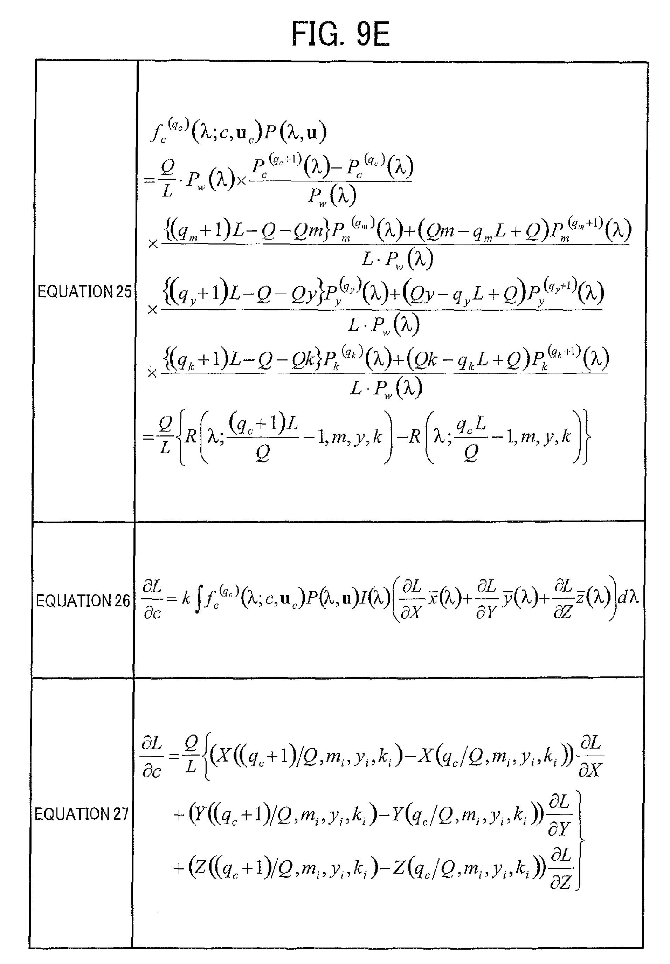

When performing on-line measurement, the values Pₘ^{(q}ₘ⁾(λ; uₘ) and Pₘ^{(q}ₘ⁺¹⁾(λ; uₘ) are stabilized to be at or near the reference values that are previously determined by adjusting process parameters Uₘ due to process control activated onto the image forming engine (the image forming section). The values Pₘ^{(q}ₘ⁾(λ; Uₘ) and Pₘ(^{q}ₘ⁺¹)(λ; uₘ) can be replaced with the reference value Pₘ^{(q}ₘ⁾(λ) and Pₘ^{(q}ₘ⁺¹⁾(λ), respectively, which are independent of uₘ. This process of approximation may be performed in a substantially manner for yellow and black to obtain the equation 25 of FIG. 9E. In the equation 25, the value R (λ; c, m, y, k) is a model value of spectral reflectance of the wavelength λ having the densities (c, m, y, k). The equation 26 of FIG. 9E is calculated to obtain the equation 27 of FIG. 9E, which is the algorithm obtained by the algorithm constructor 406c at S 104 of FIG. 5.

Referring back to FIG. 5, at S105, the correction value determiner 406b determines correction values δ(t), which satisfy the following conditions (1) and (2): (1) The square error between the estimated value { Li^{(t+1)}, aᵢ^{(t+1)}, bᵢ ^{(t+1)}} of the measured L*a*b* colour of the ith sample located at the position (xᵢ, yᵢ) at the time t+1, and the reference value (Lᵢ, aᵢ, bᵢ) of the L*a*b* colour of the ith sample located at the position (xᵢ, yᵢ) are made smaller; and (2) TRC at the time (t+1) is made smooth such that there is no inflection point.

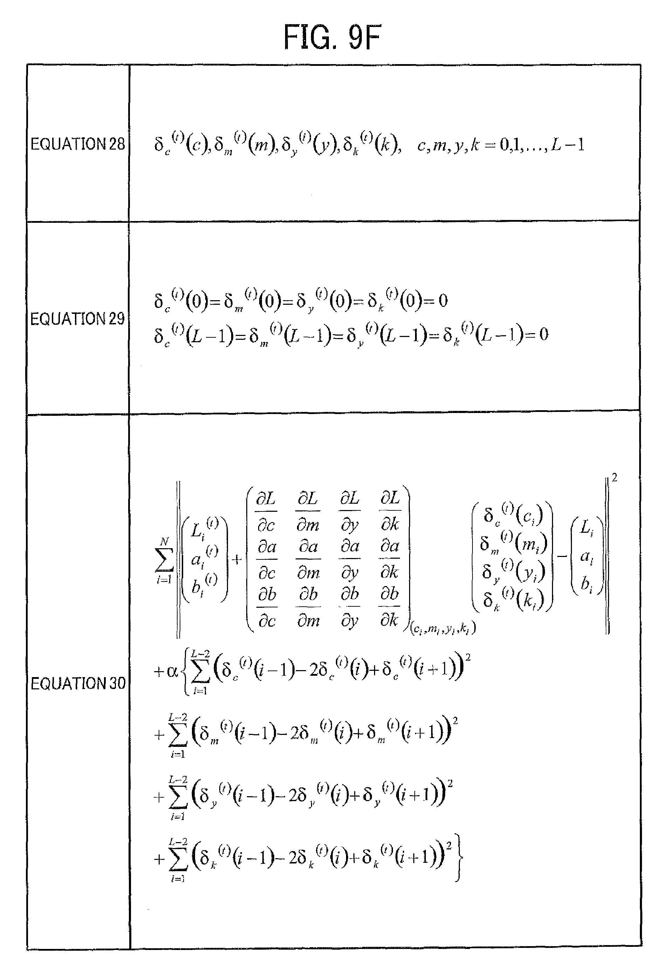

The differences δ_{c}^{(t)}, δₘ^{(t)}, δ_{y}^{(t)}, and δₖ^{(t)} in TRC between the time t and the time (t+1), which are defined as the equations 28 and 29 of FIG. 9F are obtained, which satisfy the conditions (1) and (2). More specifically, the equation 28 of FIG. 9F, which minimizes the evaluation function shown by the equation 30 of FIG. 9F, is obtained.

The first term of the equation 30 indicates the square error between the estimated value { Lᵢ^{(t+1)}, aᵢ^{(t+1)}, bᵢ ^{(t+1)}} of the measured L*a*b* colour of the ith sample located at the position (xᵢ, yᵢ) at the time t+1, and the reference value (Lᵢ, aᵢ, bᵢ) of the L*a*b* colour of the ith sample located at the position (xᵢ, yᵢ). The values of ci, mi, yi, and ki range between 0 and L-1. The second term of the equation 30 is a product of a positive constant coefficient α and the square sum of second derivative of δ_{c}^{(t)}(c), δₘ^{(t)}(m), δ_{y}⁽ⁱ⁾(y), and δₖ^{(t)}(k). The second term would be smaller as the change in TRC functions δ_{c}^{(t)}(c), δₘ^{(t)}(m), δ_{y}^{(t)}(y), and δₖ^{(t)}(k) is made smooth. Through controlling the second term, the smoothness of TRC is kept such that there is no inflection point. Since the evaluation function, which is shown by the equation 30 of FIG. 9F, is a quadratic form with respect to the variable δ^{(t)}, it can be solved using the optimization problem.

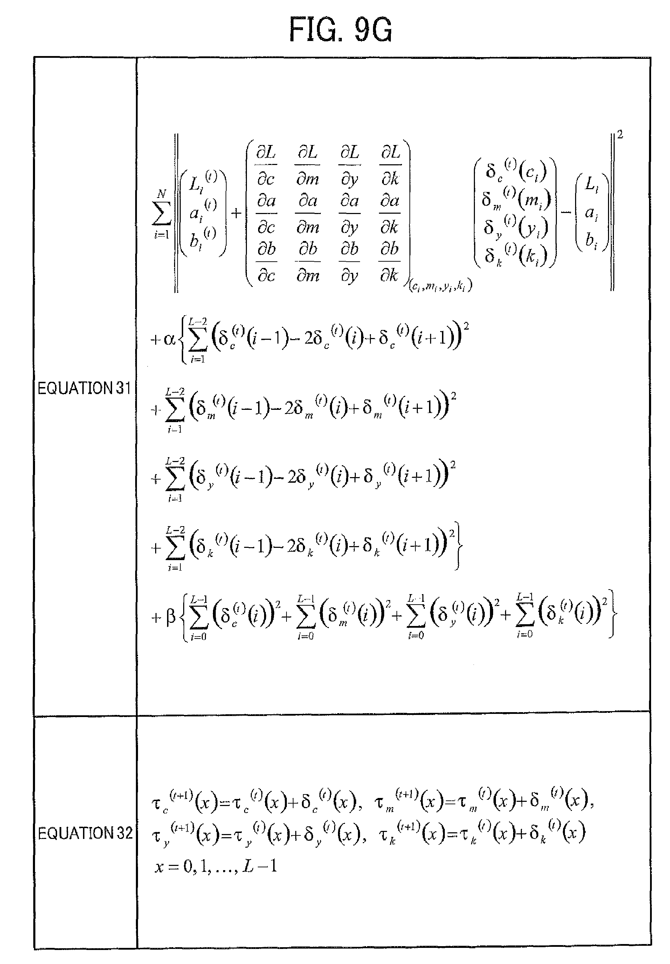

In alternative to the evaluation function shown by the equation 30 of FIG. 9F, the evaluation function shown by the equation 31 may be used. In the equation 31, the third term is a product of the positive constant coefficient β and the square sum of δ_{c}^{(t)}(c), δₘ^{(t)}(m), δ_{y}^{(t)}(y), and δₖ^{(t)}(k). As the change of TRC function is made smaller, the third term becomes smaller. Through controlling the third term, the abrupt change in TRC outputs can be suppressed. Since the evaluation function shown by the equation 31 of FIG. 9G is a quadratic form with respect to the variable δ^{(t)}, it can be solved using the optimization problem.

Once the correction values are obtained at S105 of FIG. 5, the operation proceeds to S106 to correct parameters based on the correction values obtained at S105. More specifically, the TRC is corrected as shown by the equation 32 of FIG. 9G, based on the TRC outputs and the correction values: τ_{c}^{(t+1})(x) = τ_{c}^{(t)}(x) + τ_{c}^{(t)} (x); τₘ^{(t+1)}(x) = τₘ^{(t)}(x) + δₘ^{(t)} (x); τ_{y}^{(t+1)}(x) = τ_{y}^{(t)}(x) + δ_{y}^{(t)} (x); and τₖ^{(t+1)}(x) = τₖ^{(t)}(x) + δₖ^{(t)} (x), where x = 0, 1, ..., L-1.

As described above, the main controller 406, which controls operation of the printer 100, performs region searching to search for a region that is most appropriate for multi-colour measurement. The main controller 406 refers to a plurality of algorithms each indicating the relationship between an output colour that is previously stored for each one of the plurality of primary colour toner images to be formed by an image forming unit, and a set value of an image processing parameter of the print controller 410. The spectrometer 109 measures the colour in the colour measurement area of the multi-colour toner image generated based on image data to obtain a measured result (Lᵢ^{(t)}, aᵢ^{(t)}, bᵢ ^{(t)}). The main controller 406 further obtains the difference between the measured result (Lᵢ^{(t)}, aᵢ^{(t)}, bᵢ ^{(t)}) and the reference colour (Lᵢ, aᵢ, bᵢ). Based on the mathematical models, the difference, an area ratio of toner image of each colour in the colour measurement area, and current set values of image processing parameter, the main controller 406 determines image processing parameter correction values δ_{c}^{(t)}(c), δₘ^{(t)},(m), δ_{y}⁽ⁱ⁾(y), δₖ^{(t)}(k) that minimize the difference. The main controller 406 corrects the image processing parameter with the correction values to improve colour reproducibility of multi-colour toner image. In this manner, a multi-colour image is output with improved quality, without requiring output of a test pattern image.

In this manner, the image forming apparatus is able to improve colour reproducibility of a multi-colour image, without requiring output of a test pattern image. Accordingly, the user is not required to sort out the test printed sheet as the test printed sheet is not output. Further, the image forming apparatus is able to consecutively print out images.

In this example, the image processing parameter is a tone reproduction curve of a toner image of one of a plurality of primary colours that are different from each other. The correction value determiner 406c determines the correction values of the image processing parameter so as to keep smoothness of the toner reproduction curve such that there is no inflection point. The correction value determiner 406c determines the correction values of the image processing parameter so as to suppress the abrupt change in toner reproduction curve.

In this example, the spectrometer 109 is used to measure colour of the toner image after the toner image is fixed onto the recording sheet 115. Alternatively, a spectrometer 109 may measure colour of the toner image when the toner image is formed on the intermediate transfer belt 105. In such case, the spectrometer 109 may be provided at a different location.

Numerous additional modifications and variations are possible in light of the above teachings. It is therefore to be understood that within the scope of the appended claims, the disclosure of the present invention may be practiced otherwise than as specifically described herein.

For example, elements and/or features of different illustrative embodiments may be combined with each other and/or substituted for each other within the scope of this disclosure and appended claims.

Further, as described above, any one of the above-described and other methods of the present invention may be embodied in the form of a computer program stored in any kind of storage medium. Examples of storage mediums include, but are not limited to, flexible disk, hard disk, optical discs, magneto-optical discs, magnetic tapes, involatile memory cards, ROM (read-only-memory), etc.

Alternatively, any one of the above-described and other methods of the present invention may be implemented by ASIC, prepared by interconnecting an appropriate network of conventional component circuits or by a combination thereof with one or more conventional general purpose microprocessors and/or signal processors programmed accordingly.

In one example, the present invention may reside in: a control device provided in an image forming apparatus, the image forming apparatus including: image forming means for forming a primary colour toner image of each one of a plurality of colours on a surface of an image carrier based on image data, the image carrier being one or more image carriers; image data processing means for processing the image data to be input to the image forming means; and transferring means for causing a contact member to closely contact with the surface of the image carrier to form a transfer nip and for transferring the primary colour toner images to a surface of the contact member or a recording sheet carried by the surface of the contact member to form a multi-colour toner image, the control device being configured to control the image forming means, the image data processing means and the transferring means. The control device is further configured to: perform area searching to detect a colour measurement area suitable to colour measurement from one or more images of the image data; obtain a plurality of algorithms each indicating the relationship between an output colour that is previously stored for each one of the plurality of primary colour toner images formed by the image forming means, and a set value of an image processing parameter of the image data processing means; obtain a difference between a measured result obtained by measuring means that measures the multi-colour toner image of the colour measurement area based on the image data, and a reference colour; obtain an area ratio of the primary toner image of each one of the plurality of colours in the colour measurement area of the multi-colour toner image; obtain a current set value of the image processing parameter; determine a correction value of the image processing parameter based on the plurality of algorithms, the difference, the area ratio, and the current set value, so as to make the difference to be smaller; and correct the current set value of the image processing parameter with the correction value.

For example, the control device may be implemented by the main controller 406 of the printer 100. The image forming means may be implemented by at least a portion of the process engine section of the printer 100, which includes the image forming units 103. The image data processing means may be implemented by the print controller 410 of the printer 100. The transferring means may be implemented by the rollers such as the transfer rollers 106 and the secondary transfer roller 108.

The image processing parameter is a tone reproduction curve of a toner image of each one of the plurality of primary colours.

The control device determines the correction value of the image processing parameter so as to keep smoothness of the tone reproduction curve such that there is no inflection point.

The control device determines the correction value of the image processing parameter so as to suppress the abrupt change in the tone reproduction curve.

In another example, the image forming apparatus further includes measuring means for measuring colour of the multi-colour toner image formed based on the image data. The measuring means may be, for example, a spectrometer, or any desired measuring unit capable of measuring colour of the toner image.

In another example, the present invention may reside in: a method of controlling an image forming apparatus performed by a control device provided in the image forming apparatus, the image forming apparatus including: image forming means for forming a primary colour toner image of each one of a plurality of colours on a surface of an image carrier based on image data, the image carrier being one or more image carriers; image data processing means for processing the image data to be input to the image forming means; and transferring means for causing a contact member to closely contact with the surface of the image carrier to form a transfer nip and for transferring the primary colour toner image to a surface of the contact member or a recording sheet carried by the surface of the contact member to form a multi-colour toner image, the control device being configured to control the image forming means, the image data processing means, and the transferring means. The method of controlling comprises: performing area searching to detect a colour measurement area suitable to colour measurement from one or more images of the image data; obtaining a plurality of algorithms each indicating the relationship between an output colour that is previously stored for each one of the plurality of primary colour toner images formed by the image forming means, and a set value of an image processing parameter of the image data processing means; obtaining a difference between a measured result obtained by measuring means that measures the multi-colour toner image of the colour measurement area based on the image data, and a reference colour; obtaining an area ratio of the primary toner image of each one of the plurality of colours in the colour measurement area of the multi-colour toner image; obtaining a current set value of the image processing parameter; determining a correction value of the image processing parameter based on the plurality of algorithms, the difference, the area ratio, and the current set value, so as to make the difference to be smaller; and correcting the current set value of the image processing parameter with the correction value.

In another example, the present invention may reside in a computer program comprising program code means that, when executed by a processor, instructs the processor to perform the above-described method.

In another example, the present invention may reside in: a recording medium storing a plurality of instructions which, when executed by a processor, cause the processor to perform the above-described method.

In the above-described example, the image forming apparatus is able to improve colour reproducibility of a multi-colour image, without requiring output of a test pattern image. Accordingly, the user is not required to sort out the test printed sheet as the test printed sheet is not output. Further, the image forming apparatus is able to consecutively print out images.

In alternative to forming a test pattern image used for colour measurement, in this example, the image forming apparatus measures colour of an output image that is printed according to a user instruction. More specifically, the image forming apparatus detects a colour measurement area applicable to colour measurement from one or more images to be output according to the user instruction, and measures the colour of the detected colour measurement area in the output image. The image forming apparatus refers to a plurality of algorithms each indicating the relationship between an output colour that is previously stored for each one of the plurality of primary colour toner images to be formed by an image forming unit, and a set value of an image processing parameter of the image processing section of the image forming apparatus; the difference between the measured colour and a reference colour; an area ratio of each of the primary toner images in the colour measurement area; and a current set value of the image processing parameter, to determine a correction value of the image processing parameter so as to make the difference to be smaller. The image processing parameter is corrected based on the determined correction value.

In the above-described example, the control device is implemented by the main controller 406, which is provided in the printer 100. Alternatively, the control device may be implemented by an information processing apparatus provided with a processor and a memory. In such case, the information processing apparatus is connected to the printer 100 to control image processing operation of the printer 100 through correcting an image processing parameter used for image processing such as the TRC.

Further, the information processing apparatus capable of correcting the image processing parameter may be caused to control more than one image forming apparatus through the network.

## Claims

1. A control device (406) for controlling an image processing parameter of an image forming apparatus (100) that processes image data into processed image data using the image processing parameter and forms a multi-colour toner image on a recording sheet (115) based on the processed image data using toner of a plurality of primary colours, the control device (406) comprising:
region searching means (406d) for specifying one or more areas in the processed image data as a colour measurement area applicable to colour measurement;
measured value obtaining means (406a) for obtaining a measured colour of the colour measurement area of the multi-colour toner image from measuring means (109);
reference colour obtaining means (406f) for obtaining a reference colour of the colour measurement area of the image data;
algorithm constructing means (406c) for constructing an algorithm for image processing parameter correction, based on a plurality of models each indicating the relationship between an output colour and a set value of the image processing parameter of the image forming apparatus for each one of the plurality of primary colours, an area coverage ratio of a specific primary colour toner image in the colour measurement area of the multi-colour toner image, a difference between the measured colour of the colour measurement area of the multi-colour toner image and the reference colour of the colour measurement area of the image data, and a current set value of the image processing parameter;
correction value determining means (406b) for determining a correction value of the image processing parameter using the algorithm constructed by the algorithm constructing means (406c) so as to make the difference between the measured colour and the reference colour to be smaller; and
parameter set means (406e) for correcting the current set value of the image processing parameter with the correction value determined by the correction value determining means (406b) to cause the image forming apparatus (100) to process the image data using the corrected image processing parameter.

2. The control device (406) of claim 1, wherein the image processing parameter is a tone reproduction curve of a toner image of each one of the plurality of primary colours.

3. The control device (406) of claim 2, wherein the correction value determining means (406b) further determines the correction value of the image processing parameter so as to keep smoothness of the tone reproduction curve.

4. The control device (406) of claim 3, wherein the correction value determining means (406b) further determines the correction value of the image processing parameter so as to suppress the abrupt change in the tone reproduction curve.

5. An image forming apparatus (100), comprising:
image data processing means (410) for processing the image data into the processed image data using the image processing parameter;
image forming means (103) for forming primary colour toner images of the plurality of primary colours on a surface of an image carrier based on the processed image data, the image carrier being one or more image carriers;
transferring means (106, 108) for transferring the primary colour toner images to a surface of a contact member or the recording sheet (115) carried by the surface of the contact member to form the multi-colour toner image by superimposing the primary colour toner images;
the measuring means (109) for measuring colour of the multi-colour toner image; and
the control device (406) of any one of the preceding claims.

6. The image forming apparatus (100) of claim 5, wherein the image data processing means (410) of the image forming apparatus (100) stores the tone reproduction curve of the toner image of each one of the plurality of primary colours in a memory (410c) as the image processing parameter.

7. The image forming apparatus (100) of claim 6, further comprising:
fixing means (111) for fixing the multi-colour toner image onto the recording sheet (115), wherein the measurement means (109) is provided in the fixing means (111).

8. An image forming system, comprising:
the control device (406) of any one of the preceding claims; and
the image forming apparatus (100) of any one of the preceding claims.

9. A method of controlling an image processing parameter of an image forming apparatus (100) that processes image data into processed image data using the image processing parameter and forms a multi-colour toner image on a recording sheet (115) based on the processed image data using toner of a plurality of primary colours, the method comprising:
specifying one or more areas in the processed image data as a colour measurement area applicable to colour measurement;
obtaining a measured colour of the colour measurement area of the multi-colour toner image from measuring means (109);
obtaining a reference colour of the colour measurement area of the image data;
constructing an algorithm for image processing parameter correction, based on a plurality of models each indicating the relationship between an output colour and a set value of the image processing parameter of the image forming apparatus (100) for each one of the plurality of primary colours, an area coverage ratio of a specific primary colour toner image in the colour measurement area of the multi-colour toner image, a difference between the measured colour of the colour measurement area of the multi-colour toner image and the reference colour of the colour measurement area of the image data, and a current set value of the image processing parameter;
determining a correction value of the image processing parameter using the algorithm so as to make the difference between the measured colour and the reference colour to be smaller; and
correcting the current set value of the image processing parameter with the correction value to cause the image forming apparatus (100) to process the image data using the corrected image processing parameter.

10. The method of claim 9, wherein the image processing parameter is a tone reproduction curve of a toner image of each one of the plurality of primary colours.

11. The method of claim 10, further comprising:
determining the correction value of the image processing parameter so as to keep smoothness of the tone reproduction curve.

12. The method of claim 11, further comprising:
determining the correction value of the image processing parameter so as to suppress the abrupt change in the tone reproduction curve.

13. A computer program comprising program code means that, when executed by a processor (402), instructs the processor (402) to perform the method of any one of claims 9 to 12.

14. A recording medium (403, 405) storing the computer program of claim 13.
